# EUROPÄISCHE PATENTSCHRIFT

(11) **EP 3 737 941 B1**
(45) Veröffentlichungstag und Bekanntmachung des Hinweises auf die Patenterteilung: **19.03.2025**
(21) Anmeldenummer: 18830397.8
(22) Anmeldetag: 10.12.2018
(51) Int. Cl.: G01N 29/024, G01N 29/22, G01F 23/296

(54) **ULTRASCHALLSENSOR MIT ULTRASCHALLREFLEKTOR SOWIE FLUIDTANK MIT EINEM DERARTIGEN ULTRASCHALLSENSOR**
ULTRASONIC SENSOR WITH ULTRASONIC REFLECTOR AND FLUID TANK COMPRISING SUCH AN ULTRASONIC SENSOR
DÉTECTEUR D'ULTRASONS AVEC RÉFLECTEUR D'ULTRASONS ET RÉSERVOIR DE FLUIDE MUNI D'UN TEL DÉTECTEUR D'ULTRASONS

(30) Priorität: 11.01.2018 DE 102018200320
(43) Veröffentlichungstag der Anmeldung: 18.11.2020
(73) Patentinhaber: Robert Bosch GmbH, 70442 Stuttgart (DE)
(72) Erfinder: GERLACH, Andre, 71229 Leonberg-Hoefingen (DE); LIEBLER, Marko, 75015 Bretten (DE); SCHEUFELE, Bernd, 73257 Koengen (DE)
(86) Internationale Anmeldenummer: PCT/EP2018/084098
(87) Internationale Veröffentlichungsnummer: WO 2019/137710

(56) Entgegenhaltungen:
- EP-A1- 1 748 285
- DE-A1- 102013 219 643
- US-A- 3 942 873
- US-A1- 2007 031 140

## Beschreibung

Die Erfindung betrifft einen Ultraschallsensor mit einem Ultraschallreflektor, also einem Reflektor zum Reflektieren eines Ultraschallsignals, sowie einen Fluidtank, der mit einem derartigen Ultraschallsensor ausgestattet ist.

### Stand der Technik

Um die immer strengeren gesetzlichen Vorgaben für Abgasemissionen von Kraftfahrzeugen mit Verbrennungsmotoren zu erfüllen, ist es insbesondere bei Dieselmotoren erforderlich, die Stickoxide (NOₓ) im Abgas zu verringern. Hierfür werden Abgasnachbehandlungssysteme mit SCR-Katalysatoren (SCR = "Selective Catalytic Reduction") eingesetzt, welche die Stickoxide selektiv in Stickstoff reduzieren. Als Reduktionsmittel wird hierfür eine wässrige Harnstofflösung verwendet, die vor dem SCR-Katalysator in den Abgasstrang eingebracht wird, den für die Reduktion benötigten Ammoniak bildet und zur gewünschten Verringerung der Stickoxide führt. In der Regel wird hierfür eine 32,5-prozentige wässrige Harnstofflösung eingesetzt. Dieses Reduktionsmittel ist für den Betrieb der Verbrennungskraftmaschine in ausreichender Menge und Qualität in einem Tank des Fahrzeugs bereitzustellen. Bei einer zu geringen Qualität bzw. Konzentration der Harnstofflösung nimmt der Wirkungsgrad der Stickoxidreduktion deutlich ab. Bei einem zu hohen Harnstoffanteil reagiert das gebildete Ammoniak nicht mit den Stickoxiden im Abgas und Ammoniak wird emittiert. Daher muss regelmäßig die Qualität bzw. Konzentration der wässrigen Harnstofflösung im Tank bestimmt werden. Insbesondere muss auch eine unzulässige Nachbetankung mit Wasser anstelle von Harnstofflösung erkannt werden. Darüber hinaus besteht ein Bedarf, die Füllmenge bzw. Füllstandshöhe der Harnstofflösung im Tank zu bestimmen.

Da die Schallgeschwindigkeit in einer Harnstofflösung eine Funktion der Konzentration ist, können sowohl die Konzentration als auch die Füllhöhe der Harnstofflösung in einem Tank durch Bestimmen der Laufzeiten von Ultraschallsignalen in der Harnstofflösung bestimmt werden.

Bei der Messung der Füllhöhe wird üblicherweise die Laufzeit einer Schallwelle, die von einem beispielsweise piezoelektrischen Ultraschallwandler, abgestrahlt und wieder empfangen wird, gemessen. Die Schallwandler strahlen typischerweise in vertikaler Richtung ab und das Schallsignal wird an der Fluidoberfläche reflektiert. Die Konzentrationsmessung erfolgt ebenfalls über eine Laufzeitmessung im Puls-Echo-Verfahren. Hierbei wird ein Reflektor in einem bekannten Abstand zu einem Ultraschallwandler benötigt, um die vom Ultraschallwandler abgestrahlte Schallwelle über einen bekannten Ausbreitungsweg wieder auf diesen zurück zu reflektieren.

Es existieren ebenfalls Messanordnungen, die mit nur einem Ultraschallsensor sowohl den Füllstand als auch die Konzentration bestimmen, siehe z.B. DE 10 2013 219 643 A1. Hierfür werden dann mindestens zwei Reflektoren benötigt, ein Reflektor zur Umlenkung einer horizontal abgestrahlten Schallwelle in vertikale Richtung und mindestens ein zweiter Reflektor zur Realisierung einer Messstrecke für die Konzentrationsbestimmung mit festem Abstand zum Ultraschallwandler.

EP 1 748 285 A1 offenbart eine Vorrichtung zum Erfassen eines Füllstands einer Flüssigkeit in einem Behälter, mit einem Ultraschallsender zum Senden von Ultraschallsignalen in die Flüssigkeit; und mit einem Ultraschallempfänger zum Empfangen von wenigstens von einer Oberfläche der Flüssigkeit reflektierten Ultraschallsignalen. Es ist wenigstens ein als Festkörper ausgebildeter Haupt-Ultraschallreflektor vorgesehen, der im Bereich eines Hauptschallkegels der Ultraschallsignale im Inneren des Behälters in einer Höhe angeordnet ist, die im Wesentlichen einem vorgegebenen Grenzstandpegel der Flüssigkeit in dem Behälter entspricht. Zusätzlich ist wenigstens ein als Festkörper ausgebildeter Hilfs-Ultraschallreflektor im Bereich des Hauptschallkegels angeordnet. Der Hilfs-Ultraschallreflektor ist mit einem Abstand zu dem Ultraschallsender angeordnet, der geringer ist als der Abstand zwischen dem Ultraschallsender und dem Haupt-Ultraschallreflektor.

US 2007/031140 A1 beschreibt einen optischen Tiefpassfilter und ein Verfahren zur Herstellung eines solchen Filters unter Verwendung eines Artikels mit einer doppelbrechenden Oberfläche zum Brechen von einfallendem Licht.

Es ist eine Aufgabe der Erfindung, die Zahl der benötigten Reflektoren zu reduzieren und mit einem Reflektor sowohl eine Umlenkung als auch eine direkte Rückstreuung der Schallwelle auf einen Ultraschallwandler zu realisieren.

### Offenbarung der Erfindung:

Ausführungsbeispiele der Erfindung umfassen einen Ultraschallsensor zur Laufzeitmessung in einem Medium, insbesondere in einem Fluid, wie z. B. in einer wässrigen Harnstofflösung, wobei der Ultraschallsensor einen Ultraschallsender zum Aussenden eines Ultraschallsignals, einen Ultraschallempfänger zum Empfangen eines Ultraschallsignals und einen Reflektor zum Reflektieren eines Ultraschallsignals aufweist. Dabei umfaßt der Reflektor wenigstens ein erstes Reflektorelement, das ausgebildet ist, ein einfallendes Ultraschallsignal in einem Winkel, der größer als 60° und kleiner als 120° ist, insbesondere in einem Winkel von 90°, zur Einfallsrichtung zu reflektieren. Der Reflektor umfasst darüber hinaus eine Vielzahl von zweiten Reflektorelementen, die auf dem wenigstens einen ersten Reflektorelement ausgebildet sind. Die zweiten Reflektorelemente sind dazu ausgebildet, ein einfallendes Ultraschallsignal im Wesentlichen in die Einfallsrichtung zurückzureflektieren.

Ausführungsbeispiele der Erfindung umfassen darüber hinaus einen Fluidtank zur Speicherung eines Fluids, insbesondere eines fluiden Reduktionsmittels zur Abgasreduktion, der mit einem solchen Ultraschallsensor ausgestattet ist.

Das von dem ersten Reflektorelement in einem Winkel zur Einfallsrichtung, der größer als 60° und kleiner als 120° ist, reflektierte Ultraschallsignal ermöglicht es, die Füllhöhe eines Fluids im Tank und damit die im Tank vorhandene Fluidmenge zu bestimmen.

Das von den zweiten Reflektorelementen in die Einfallsrichtung zurück reflektierte Ultraschallsignal ermöglicht es, die Schallgeschwindigkeit im Fluid und hieraus die Konzentration (Qualität) des Fluids im Tank zu bestimmen.

Sowohl die Füllhöhe als auch die Konzentration (Qualität) des Fluids im Tank können so mit nur einem einzigen Reflektor bestimmt werden. Der Aufwand und die Kosten für das Bereitstellen und Montieren eines zweiten Reflektors im Tank können so vermieden werden. Die Kosten einer Ultraschall-Messvorrichtung, die es ermöglicht, sowohl die Füllhöhe als auch die Konzentration (Qualität) des Fluids im Tank zu bestimmen, können deutlich reduziert werden.

In einer Ausführungsform ist das wenigstens eine erste Reflektorelement erheblich größer, d. h., es hat wenigstens eine erheblich größere Abmessung als die zweiten Reflektorelemente.

Das erste Reflektorelement hat insbesondere wenigstens eine Abmessung a1, die wesentlich größer als Wellenlänge λ des Ultraschallsignals im Medium, z. B. der wässrigen Harnstofflösung, ist. Die wenigstens eine Abmessung a1 des ersten Reflektorelements kann insbesondere größer als das Dreifache der Wellenlänge λ und kleiner als das Einhundertfache der Wellenlänge λ des Ultraschallsignals im Medium sein (3 λ ≤ a1 ≤ 100 λ).

Die zweiten Reflektorelemente haben insbesondere wenigstens eine Abmessung a2, die kleiner oder gleich der Wellenlänge λ des Ultraschallsignals im Medium (der wässrigen Harnstofflösung) ist. Die wenigstens eine Abmessung a2 der zweiten Reflektorelemente kann insbesondere größer als ein Zehntel der Wellenlänge λ und kleiner als das Anderthalbfache der Wellenlänge λ des Ultraschallsignals im Medium sein (0,1 λ ≤ a2 ≤ 1,5 λ).

Auf diese Weise kann erreicht werden, dass das erste Reflektorelement einen ersten Teil eines einfallenden Ultraschallsignals in einem Winkel β zur Einfallsrichtung reflektiert, der größer als 60° und kleiner als 120° ist, und dass die zweiten Reflektorelemente einen zweiten Teil des einfallenden Ultraschallsignals im Wesentlichen in die Einfallsrichtung zurück reflektiert.

Die ersten und zweiten Reflektorelemente können beispielsweise in einem additiven 3D-Druckverfahren oder in einem Umformungsprozess hergestellt werden.

In einer Ausführungsform werden die ersten und die zweiten Reflektorelemente jeweils aus einem Material gefertigt, das eine große akustische Impedanz im Vergleich zum umgebenden Fluid hat, beispielsweise aus Metall oder Keramik. Die ersten und zweiten Reflektorelemente können aus dem gleichen Material oder aus unterschiedlichen Materialien hergestellt werden.

Der Ultraschallsender und der Ultraschallempfänger können getrennt voneinander oder als integrierter Schallwandler, beispielsweise als piezoelektrische Schallwandler, ausgebildet sein. Durch Verwendung eines integrierten Schallwandlers können die Abmessung und die Kosten für den Ultraschallsender und den Ultraschallempfänger reduziert werden.

In einer Ausführungsform erstrecken sich die zweiten Reflektorelemente im Wesentlichen in einer Ebene, die gegenüber der Einfallrichtung des Ultraschallsignals geneigt ist. Durch Neigen der Ebene der zweiten Reflektorelemente gegenüber der Einfallrichtung des Ultraschallsignals kann die Richtung des reflektierten Ultraschallsignals eingestellt werden. Insbesondere kann die Richtung des reflektierten Ultraschallsignals so eingestellt werden, dass das Ultraschallsignal in Richtung der Oberfläche eines im Tank gespeicherten Fluids reflektiert wird.

Ausführungsbeispiele der Erfindung werden im Folgenden unter Bezugnahme auf die beigefügten Figuren erläutert.

### Kurze Beschreibung der Figuren

Figur 1 zeigt einen Fluidtank mit einem Ultraschallsensor gemäß einem Ausführungsbeispiel der Erfindung.
Figur 2 zeigt ein Reflektorelement, auf dem zweite Reflektorelemente ausgebildet sind.

Die Figuren 3 bis 5 zeigen jeweils ein zweites Reflektorelement.

Die Figuren 6 bis 8 zeigen jeweils ein erstes Reflektorelement, auf dem jeweils mehrere zweite Reflektorelemente ausgebildet sind.

### Figurenbeschreibung

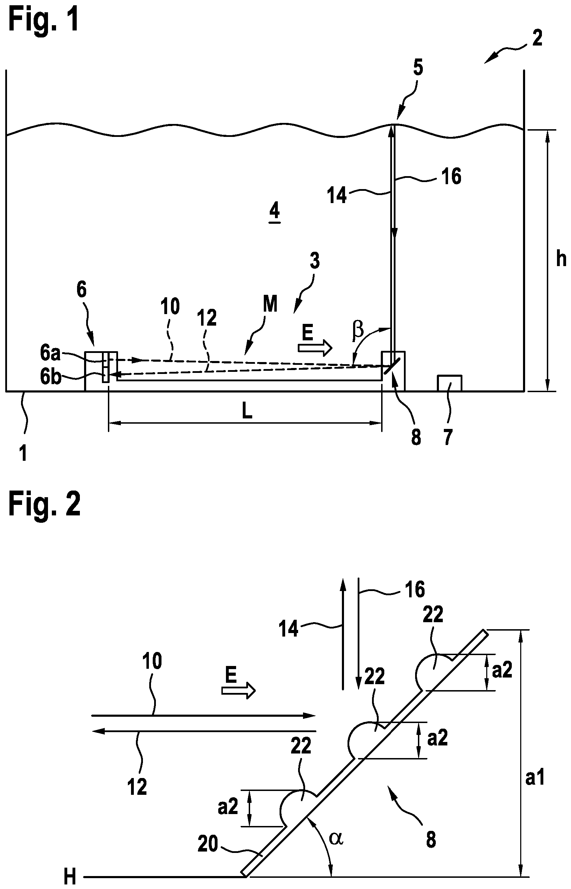

Fig. 1 zeigt in einer schematischen Schnittansicht einen Fluidtank 2, insbesondere einen Fluidtank 2 zur Speicherung eines flüssigen Reduktionsmittels 4 zur Abgasreduktion (wässrige Harnstofflösung), mit einem Ultraschallsensor 3, der gemäß einem Ausführungsbeispiel der Erfindung ausgebildet ist.

Der Ultraschallsensor 3 ist am Boden 1 des Tanks 2 angeordnet und umfasst einen piezoelektrischen Schallwandler 6, der ausgebildet ist, Ultraschallsignale 10, 12 auszusenden und zu empfangen. D. h. der piezoelektrische Schallwandler 6 dient sowohl als Ultraschallsender 6a als auch als Ultraschallempfänger 6b.

Im Betrieb sendet der piezoelektrische Schallwandler 6 ein Ultraschallsignal 10 in das im Tank 2 befindliche Fluid 4 aus. Die Schallwellen des während des Sendebetriebs des Schallwandlers 6 ausgesendeten Ultraschallsignals 10 durchlaufen eine definierte Messstrecke M in dem zu analysierenden Fluid 4. Ein Teil des Ultraschallsignals 10 wird an einem Reflektor 8 für Ultraschallwellen, der am gegenüberliegenden Ende der Messstrecke M angeordnet ist, zurück reflektiert und gelangt nach erneutem Durchlaufen der gleichen Messstrecke M schließlich wieder auf den nun als Ultraschallempfänger 6b arbeitenden Schallwandler 6. Aus der gemessenen Laufzeit des Ultraschallsignals 10, 12 zwischen dem Aussenden und dem Empfangen kann bei bekannter Länge L der Messstrecke M die Schallgeschwindigkeit im Fluid 4 bestimmt werden.

Mit einem ebenfalls im Tank 2 angebrachten Temperatursensor 7 kann die Temperatur des Fluids 4 bestimmt werden.

Da die Schallgeschwindigkeit im Fluid 4 eine bekannte Funktion der Konzentration und der Temperatur des Fluids 4, insbesondere wässriger Harnstofflösung, ist, kann die Konzentration des Fluids 4 aus der gemessenen Temperatur des Fluids 4 und der ermittelten Schallgeschwindigkeit im Fluid 4 bestimmt werden.

Ein anderer Teil der auf den Reflektor 8 treffenden Ultraschallwellen des ausgesendeten Ultraschallsignals 10 wird nach oben in Richtung der Oberfläche 5 des Fluids 4 im Tank 2 reflektiert.

Die so umgelenkten Ultraschallwellen 14 werden an der Fluidoberfläche 5 reflektiert. Die an der Fluidoberfläche 5 reflektierten Ultraschallwellen 16 werden von dem Reflektor 8 erneut, diesmal in Richtung des Schallwandlers 6, reflektiert, so dass auch die Laufzeit der an der Fluidoberfläche 5 reflektierten Schallwellen 14, 16 bestimmt werden kann.

Da die Schallgeschwindigkeit im Fluid 4 aus der zuvor beschriebenen Messung und die Länge L der Messstrecke M bekannt sind, kann aus der Laufzeit der an der Fluidoberfläche 5 reflektierten Schallwellen 14, 16 die Füllhöhe h des Fluids 4 im Tank 2 bestimmt werden.

Für das beschriebene Verfahren ist es erforderlich, dass der Reflektor 8 einen ersten Teil des einfallenden Schallsignals 10 in die Einfallrichtung E zurück reflektiert und einen zweiten Teil des einfallenden Schallsignals 10, 14 in einem Winkel β, der größer als 60° und kleiner als 120° ist, zur Einfallsrichtung E reflektiert.

Fig. 2 zeigt eine schematische Schnittansicht eines Ausführungsbeispiels eines Reflektor 8.

Der in der Fig. 2 gezeigte Reflektor 8 umfasst ein erstes Reflektorelement 20, das in Form einer Platte 20 ausgebildet ist. Die Platte 20 ist gegenüber der Horizontalen H geneigt, beispielsweise in einem Winkel α zwischen 30° und 60°, insbesondere in einem Winkel vom 45°.

Das erste Reflektorelement 20 hat in vertikaler Richtung, d. h. in einem rechten Winkel zur Horizontalen H, eine Abmessung a1, die erheblich größer als die Wellenlänge λ der von dem Schallwandler 6 ausgesendeten Ultraschallsignale 10, 12, 14, 16 im Fluid 4 ist, insbesondere gilt 3 λ ≤ a1 ≤ 100 λ.

Im Ergebnis reflektiert das erste Reflektorelement 20 ein in horizontaler Richtung einfallendes Ultraschallsignal 10 in einem Winkel β, der größer als 60° und kleiner als 120° ist, insbesondere in einem rechten Winkel (β=90°), zur Einfallsrichtung E in Richtung der Fluidoberfläche 5 (siehe Fig. 1).

Ebenso wird ein Ultraschallsignal 16, das von der Fluidoberfläche 5 reflektiert worden ist, in die horizontale Richtung auf den in der Fig. 2 nicht gezeigten Schallwandler 6 reflektiert (siehe Fig. 1).

Die von dem ersten Reflektorelement 20 reflektierten Schallwellen 10, 16 können daher zur Bestimmung Füllhöhe h des Fluids 4 im Tank 2 verwendet werden, wie es im Zusammenhang mit der Fig. 1 beschrieben worden ist.

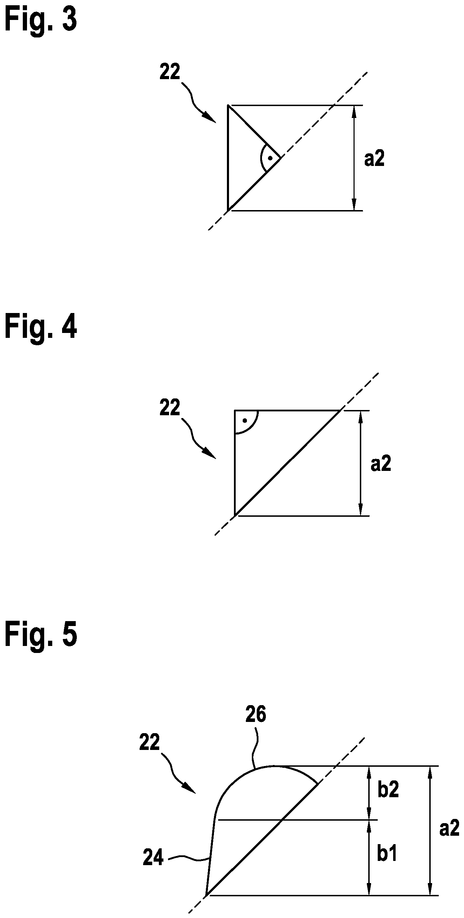

Auf dem ersten Reflektorelement 20 sind mehrere zweite Reflektorelemente 22 ausgebildet. In dem in der Fig. 2 gezeigten Ausführungsbeispiel sind die zweiten Reflektorelemente 22 kuppelförmig mit einem nahezu halbkreisförmigen Querschnitt ausgebildet. Diese Ausgestaltung der zweiten Reflektorelemente 22 ist jedoch nur beispielhaft. Die zweiten Reflektorelemente 22 können auch andere Formen haben. Beispiele für alternative Ausführungsformen werden weiter unten unter Bezugnahme auf die Figuren 4 bis 8 beschrieben.

Die zweiten Reflektorelemente 22 haben jeweils eine Abmessung a2, in dem in der Fig. 2 gezeigten Ausführungsbeispiel den Durchmesser der Kuppel, die nicht wesentlich größer als die Wellenlänge λ der Ultraschallsignale 10, 12, 14, 16 im Fluid 4 ist, insbesondere gilt: 0,1 λ ≤ a2 ≤ 1,5 λ.

Die zweiten Reflektorelemente 22 reflektieren ein einfallendes Ultraschallsignal 10 im Wesentlichen, z. B. in einem Winkel zwischen 175° und 185°, zurück in die Einfallsrichtung E, d. h. zurück auf den Schallwandler 6. Die von den zweiten Reflektorelementen 22 reflektierten Schallwellen 12 können daher zum Bestimmen der Laufzeit des Schalls im Fluid 4 und damit zum Bestimmen der Konzentration des Fluids 4 verwendet werden, wie es im Zusammenhang mit der Fig. 1 beschrieben worden ist.

Die Figuren 3 bis 5 zeigen beispielhaft mögliche alternative Ausführungsformen der zweiten Reflektorelemente 22.

Die zweiten Reflektorelemente 22 können beispielsweise mit einem dreieckigen Querschnitt ausgebildet sein, wie in den Figuren 3 und 4 gezeigt. Die Reflektorelemente 22 können insbesondere einen Querschnitt in Form eines (nahezu) rechtwinkligen Dreiecks haben, wobei der rechte Winkel an dem ersten Reflektorelement 20 angeordnet (siehe Fig. 3), oder von dem ersten Reflektorelement 20 abgewandt (siehe Fig. 4) sein kann. Die zweiten Reflektorelemente 22 können auch vier- oder mehreckige Querschnitte haben, die in den Figuren nicht gezeigt sind.

Die zweiten Reflektorelemente 22 können auch eine Kombination aus einem geradlinigen Bereich 24 und einem gekrümmten Bereich 26 aufweisen, wie es in der Fig. 5 gezeigt ist. Das Verhältnis zwischen der Abmessung b1 des linearen Bereichs 24 und der Abmessung b2 des gekrümmten Bereichs 26 kann variiert werden, solange die gesamte Abmessung a2 des zweiten Reflektorelements 22 nicht wesentlich größer als die Wellenlänge λ des Ultraschallsignals im Medium ist, wobei insbesondere gilt: 0,1 λ ≤ a2 ≤ 1,5 λ.

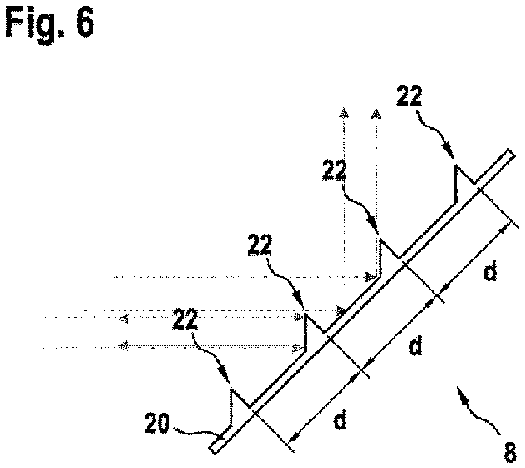

Die Figuren 6 bis 8 zeigen mögliche Ausführungsbeispiele eines ersten Reflektorelements 20, auf dem mehrere zweite Reflektorelemente 22 angeordnet/ausgebildet sind.

Die in der Fig. 6 gezeigten zweiten Reflektorelemente 22 entsprechen den in der Fig. 3 gezeigten dreieckigen zweiten Reflektorelementen 22 und sind in gleichen Abständen d voneinander auf dem ersten Reflektorelement 20 angeordnet.

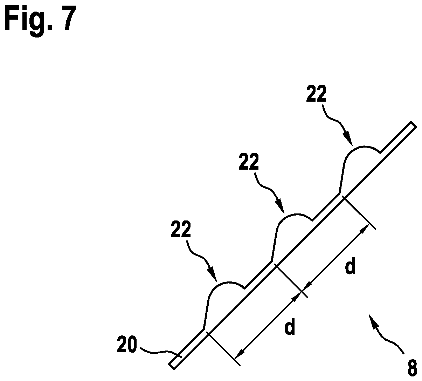

Die in der Fig. 7 gezeigten zweiten Reflektorelemente 22 entsprechen im Wesentlichen den in der Fig. 5 gezeigten zweiten Reflektorelementen 22 und sind in gleichen Abständen d voneinander auf dem ersten Reflektorelement 20 angeordnet.

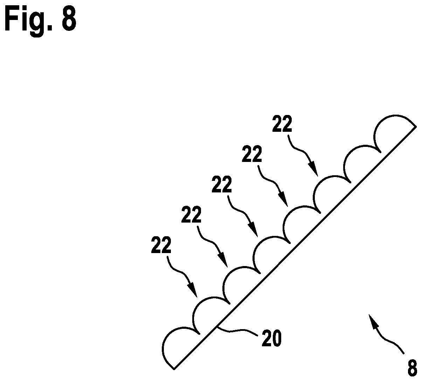

Die in der Fig. 8 gezeigten zweiten Reflektorelemente 22 entsprechen den in der Fig. 2 gezeigten zweiten Reflektorelementen 22. Anders als in der Fig. 2 sind die zweiten Reflektorelemente 22 in dem in der Fig. 8 gezeigten Ausführungsbeispiel direkt benachbart, d. h. ohne Abstände d, auf dem ersten Reflektorelement 20 angeordnet.

In alternativen, nicht in den Figuren gezeigten Ausführungsbeispielen können auch die in den Figuren 3, 4, 5, 6, und 7 gezeigten zweiten Reflektorelemente 22 so auf dem ersten Reflektorelement 20 angeordnet sein, dass sie einander direkt benachbart sind.

Der Fachmann versteht, dass auch andere als die in den Figuren 2 bis 8 gezeigten Formen der ersten und zweiten Reflektorelemente 20, 22 möglich sind, solange die ersten und zweiten Reflektorelemente 20, 22 die gewünschte Eigenschaft aufweisen, dass die ersten Reflektorelemente 20 ein einfallendes Ultraschallsignal 10, 16 in einem Winkel β, der größer als 60° und kleiner als 120° ist, zur Einfallsrichtung reflektieren und dass die zweiten Reflektorelemente 22 ein einfallendes Ultraschallsignal 10, 12 im Wesentlichen in die Einfallsrichtung zurück reflektieren.

Ausführungsbeispiele der Erfindung, wie sie in den Figuren gezeigt sind, ermöglichen es, sowohl die Konzentration (Qualität) des Fluids 4 als auch die Füllhöhe h des Fluids 4 im Tank 2 unter Verwendung eines einzigen Reflektor 8 zu bestimmen, so dass kein zweiter Reflektor 8 im Tank 2 benötigt wird.

## Patentansprüche

1. Ultraschallsensor (3) zur Laufzeitmessung in einem Medium (4), insbesondere einem Fluid (4), wobei der Ultraschallsensor (3) aufweist:
einen Ultraschallsender (6a), der zum Aussenden eines Ultraschallsignals (10, 16) ausgebildet ist;
einen Ultraschallempfänger (6b), der zum Empfangen eines Ultraschallsignals (10, 16) ausgebildet ist;
einen Reflektor (8) zum Reflektieren eines Ultraschallsignals (10, 16) mit wenigstens einem ersten Reflektorelement (20), das ausgebildet ist, ein einfallendes Ultraschallsignal (10, 16) in einem Winkel β zur Einfallsrichtung (E) zu reflektieren, wobei 60° < β < 120° ist;
wobei auf jedem ersten Reflektorelement (20) eine Vielzahl von zweiten Reflektorelementen (22) ausgebildet ist, die dazu ausgebildet sind, ein einfallendes Ultraschallsignal (10, 16) im Wesentlichen in die Einfallsrichtung (E) zurückzureflektieren.

2. Ultraschallsensor (3) nach Anspruch 1, wobei das wenigstens eine erste Reflektorelement (20) erheblich größer als die zweiten Reflektorelemente (22) ist.

3. Ultraschallsensor (3) nach Anspruch 1, wobei der Ultraschallsender (6a) und der Ultraschallempfänger (6b) als integrierter Schallwandler (6), insbesondere als integrierter piezoelektrischer Schallwandler (6), ausgebildet sind.

4. Ultraschallsensor (3) nach einem der vorhergehenden Ansprüche, wobei jedes zweite Reflektorelement (22) eine Ebene aufweist, die gegenüber der Einfallrichtung (E) des Ultraschallsignals (10, 16) geneigt ist.

5. Ultraschallsensor (3) nach einem der vorhergehenden Ansprüche, wobei das wenigstens eine erste Reflektorelement (20) eine Abmessung (a1) aufweist, die wesentlich größer als die Wellenlänge (λ) des Ultraschallsignals (10, 16) im Medium (4) ist, wobei insbesondere gilt: 3 λ ≤ a1 ≤ 100 λ.

6. Ultraschallsensor (3) nach einem der vorhergehenden Ansprüche, wobei jedes zweite Reflektorelement (22) eine Abmessung (a2) aufweist, die nicht wesentlich größer als die Wellenlänge (λ) des Ultraschallsignals (10, 16) im Medium (4) ist, wobei insbesondere gilt: 0,1 λ ≤ a2 ≤ 1,5 λ.

7. Fluidtank (2) zur Speicherung eines Fluids (4), insbesondere eines fluiden Reduktionsmittels (4) zur Abgasreduktion, wobei in dem Fluidtank (2) ein Ultraschallsensor (3) nach einem der vorhergehenden Ansprüche vorgesehen ist.

## Claims

1. Ultrasonic sensor (3) for propagation time measurement in a medium (4), in
particular a fluid (4), wherein the ultrasonic sensor (3) has:
an ultrasonic transmitter (6a) designed to transmit an ultrasonic signal (10, 16);
an ultrasonic receiver (6b) designed to receive an ultrasonic signal (10, 16);
a reflector (8) for reflecting an ultrasonic signal (10, 16), having at least one first reflector element (20) designed to reflect an incident ultrasonic signal (10, 16) at an angle β to the direction of incidence (E), where 60° < β < 120°;
wherein each first reflector element (20) has a multiplicity of second reflector elements (22) formed on it that are designed to reflect back an incident ultrasonic signal (10, 16) substantially in the direction of incidence (E).

2. Ultrasonic sensor (3) according to Claim 1, wherein the at least one first reflector element (20) is considerably larger than the second reflector elements (22).

3. Ultrasonic sensor (3) according to Claim 1, wherein the ultrasonic transmitter (6a) and the ultrasonic receiver (6b) are in the form of an integrated sound transducer (6), in particular in the form of an integrated piezoelectric sound transducer (6).

4. Ultrasonic sensor (3) according to one of the preceding claims, wherein each second reflector element (22) has a plane that is inclined relative to the direction of incidence (E) of the ultrasonic signal (10, 16).

5. Ultrasonic sensor (3) according to one of the preceding claims, wherein the at least one first reflector element (20) has a dimension (a1) that is substantially greater than the wavelength (λ) of the ultrasonic signal (10, 16) in the medium (4), wherein in particular: 3 λ ≤ a1 ≤ 100 λ.

6. Ultrasonic sensor (3) according to one of the preceding claims, wherein each second reflector element (22) has a dimension (a2) that is not substantially greater than the wavelength (λ) of the ultrasonic signal (10, 16) in the medium (4), wherein in particular: 0.1 λ ≤ a2 ≤ 1.5 λ.

7. Fluid tank (2) for storing a fluid (4), in particular a fluid reducing agent (4) for exhaust gas reduction, wherein there is provision in the fluid tank (2) for an ultrasonic sensor (3) according to one of the preceding claims.

## Revendications

1. Capteur à ultrasons (3) pour la mesure de temps de parcours dans un milieu
(4), en particulier un fluide (4), le capteur à ultrasons (3) présentant :
un émetteur d'ultrasons (6a) qui est réalisé pour émettre un signal ultrasonore (10, 16) ;
un récepteur d'ultrasons (6b) qui est réalisé pour recevoir un signal ultrasonore (10, 16) ;
un réflecteur (8) pour réfléchir un signal ultrasonore (10, 16) par au moins un élément de réflecteur (20) qui est réalisé pour réfléchir un signal ultrasonore incident (10, 16) selon un angle β par rapport à la direction d'incidence (E), où 60° < β < 120° ;
dans lequel une pluralité de deuxièmes éléments de réflecteur (22) est réalisée sur chaque premier élément de réflecteur (20), lesdits éléments étant réalisés pour renvoyer un signal ultrasonore incident (10, 16) substantiellement dans la direction d'incidence (E).

2. Capteur à ultrasons (3) selon la revendication 1, dans lequel ledit au moins un premier élément de réflecteur (20) est nettement plus grand que les deuxièmes éléments de réflecteur (22).

3. Capteur à ultrasons (3) selon la revendication 1, dans lequel l'émetteur d'ultrasons (6a) et le récepteur d'ultrasons (6b) sont réalisés sous la forme de transducteurs acoustiques (6) intégrés, en particulier sous la forme de transducteurs acoustiques (6) piézoélectriques intégrés.

4. Capteur à ultrasons (3) selon l'une quelconque des revendications précédentes, dans lequel un élément de réflecteur (22) sur deux présente un plan qui est incliné par rapport à la direction d'incidence (E) du signal ultrasonore (10, 16).

5. Capteur à ultrasons (3) selon l'une quelconque des revendications précédentes, dans lequel ledit au moins un premier élément de réflecteur (20) présente une dimension (a1) qui est nettement plus grande que la longueur d'onde (λ) du signal ultrasonore (10, 16) dans le milieu (4), où en particulier : 3 λ ≤ a1 ≤ 100 λ.

6. Capteur à ultrasons (3) selon l'une quelconque des revendications précédentes, dans lequel un élément de réflecteur (22) sur deux présente une dimension (a2) qui n'est pas nettement plus grande que la longueur d'onde (λ) du signal ultrasonore (10, 16) dans le milieu (4), où en particulier : 0,1 λ ≤ a2 ≤ 1,5 λ.

7. Réservoir de fluide (2) permettant de stocker un fluide (4), en particulier un agent réducteur fluide (4) pour la réduction des gaz d'échappement, un capteur à ultrasons (3) selon l'une quelconque des revendications précédentes étant prévu dans le réservoir de fluide (2).
